Europäisches Patentamt

European Patent Office

Office européen des brevets

(11) Veröffentlichungsnummer: **0 326 565**
**B1**

(12) **EUROPÄISCHE PATENTSCHRIFT**

(45) Veröffentlichungstag der Patentschrift: **14.11.90**

(21) Anmeldenummer: **87906406.1**

(22) Anmeldetag: **17.09.87**

(86) Internationale Anmeldenummer:
**PCT/EP87/00532**

(87) Internationale Veröffentlichungsnummer:
**WO 88/01928 24.03.88 Gazette 88/07**

(51) Int. Cl.$^5$: **B 29 C 45/27**

(54) **ELEKTRISCH BEHEIZBARE PUNKTANGUSSDÜSE.**

(30) Priorität: **19.09.86 DE 3631850**

(43) Veröffentlichungstag der Anmeldung:
**09.08.89 Patentblatt 89/32**

(45) Bekanntmachung des Hinweises auf die
Patenterteilung:
**14.11.90 Patentblatt 90/46**

(84) Benannte Vertragsstaaten:
**AT CH DE FR GB IT LI NL SE**

(56) Entgegenhaltungen:
**DE-A-2 011 653**
**DE-A-2 225 954**
**DE-U-8 524 458**
**DE-U-8 618 067**

**Patent Abstracts of Japan, vol. 8, nr. 9, (M-268)**
**(1446), 14 Jan. 1984, & JP-A-58171932**
**(JIYUUOU SHOJI) 8 Oct 1983**

(73) Patentinhaber: **ZIMMERMANN, Wolfgang**
**Tulpenstrasse 15**
**D-8201 Schechen (DE)**

(72) Erfinder: **ZIMMERMANN, Wolfgang**
**Tulpenstrasse 15**
**D-8201 Schechen (DE)**

(74) Vertreter: **Flach, Dieter Rolf Paul, Dipl.-Phys.**
**et al**
**Patentanwälte Andrae/Flach/Haug/Kneissl**
**Prinzregentenstrasse 24**
**D-8200 Rosenheim (DE)**

**Beschreibung**

Die Erfindung betrifft eine elektrisch beheizbare Punktangußdüse nach dem Oberbegriff des Anspruches 1.

Der Punktanguß für Spritzgußwerkzeuge zur Herstellung von Gegenständen aus Kunststoff hat den Vorteil, daß keine weitere Bearbeitung notwendig wird, kein Abfall entsteht und Energie eingespart wird.

Da vom Grundsatz her das Problem und der Nachteil besteht, daß die Schmelze vorzeitig in dem engen, gekülten Düsenkanal einfriert und somit nur ein unvollständiger Nachdruck ausgeübt werden kann, wodurch die Spritzgußteile eine schlechte Maßhaltigkeit aufweisen können, ist es vom Grundsatz her bekannt, Punktangußsysteme mit einer Beheizung des Angußkanales vorzusehen. Dabei wird in der Regel der Angußkanal zumeist permanent beheizt, wobei als einzige Variable die Temperatur möglichst exakt geregelt wird.

Beim bekannten Heizsystem, beispielsweise gemäß dem DE—U 85 35 572 wie aber auch aus dem Patent-Abstracts of Japan, Band 8, Nr. 9 (M-268) (1446), 14, Januar 1984, & JP, A, 58171932 (JIYUUOU SHOJI) 8. Oktober 1983, auf welcher der oberbegriff der Ansprüche 1 und 8 basiert, wird die Kanalwand des Düsenkanals über eine uwaufende Heizspule beheizt. Bei anderen Systemen wird ein mit der Spitze in die Angußöffnung ragendes beheiztes Torpedo verwandt, wie dies beispielsweise in der Zeitschrift "PLASTverarbeiter, 33. Jahrgang 1982, Nr. 387 bis 392" erwähnt ist. Durch die Art der Beheizung aus Gründen der Festigkeit kann mit der herkömmlichen Torpedokonstruktion die Heizung nicht bis in unmittelbare Nähe des thermisch kritischen Angußbereiches geführt werden. Deshalb werden die Torpedospitzen oft über eine größere Länge spitzkeglig ausgeführt. Der ständig abnehmende wärmeleitende Querschnitt bedeutet zwangsläufig eine größere Temperaturdifferenz innerhalb der Düse. Die Folge ist die erhöhte Gefahr einer thermischen Schädigung der an dem Torpedo entlang fließenden Schmelze.

Es ist bereits versucht und vorgeschlagen worden, eine im Düsenkanal angeordnete Torpedospitze über einen separaten Regelkreis zu beheizen.

Dieses System ist aber äußerst aufwendig und teuer und hat sich in der Praxis nicht bewährt.

Grundsätzlich bekannt geworden ist auch ein japanisches System, bei dem die in die Angußöffnung ragende Torpedospitze zyklisch beheizt wird. Die zyklische Beheizung der Torpedospitze ist aber relativ unwirksam, weil sie von schlecht wärmeleitender Thermoplastschmelze umgeben ist.

Beim eingangs zitierten Stand der Technik bei der Beheizung der Vorkammer und des Punktangußkanals besteht der Nachteil, daß auch noch beim Entformen des Spritzgußteiles die thermoplastische Schmelze im Punktanguß heiß und damit plastisch wird. Insbesondere bei Kleinteilen wird er Entformungsvorgang gestört.

Demgegenüber kann bei dem an zweiter Stelle geschilderten Stand der Technik unter Verwendung von beheizbaren Torpedos zwar ein sog. kosmetischer Anguß erzielt werden, da der Angußbutzen beim Entformen auf der Außenseite genügend gekühlt ist und deswegen glatt abbricht. Gleichwohl hat aber dieser Stand der Technik gegenüber der Vorkammerbeheizung einige weitere entscheidende Nachteile. So wird durch das Hineinragen der beheizten Spitze in die Angußöffnung die Schergeschwindigkeit und damit die Schubspannung, die schon bei der offenen Düse oft unzulässige Werte erreicht, immer noch weiter erhöht. Dadurch kann es zu einer mechanischen Schädigung des Materials kommen. An der kalten Düsenkammer entsteht im Vergleich zur heißen Kanalwand eine stärkere Schmelzgrenzschicht, wodurch der freie Öffnungsquerschnitt, der bei einem kosmetischen Anguß sowieso schon möglichst klein sein soll, noch weiter verengt wird. Auch dies führt zu einer höheren nicht gewünschten Schubspannung. Ferner bedeutet das genaue Einpassen der Torpedospitze in die Düsenöffnung einen großen technischen Aufwand, der sich auch im hohen Preis des Systems niederschlägt. Schließlich entsteht bei einem Farb- oder Materialwechsel eine große Anzahl von Ausschußteilen, da die komplizierte Schmelzführung nur eine langsame Verdrängung des alten Materials durch das neue zuläßt.

Aufgabe der vorliegenden Erfindung ist es, die Nachteile nach dem Stand der Technik zu überwinden und eine thermodynamische Punktangußdüse zu schaffen, mit der ein kosmetischer Anguß bei größtmöglicher freier Strömungsöffnung zur Vermeidung von Scher- und Schubspannungen zu schaffen ist.

Die Aufgabe wird erfindungsgemäß entsprechend den im Anspruch 1 bzw. im Anspruch 8 angegebenen Merkmalen gelöst. Vorteilhafte Ausgestaltungen der Erfindung sind in den Unteransprüchen angegeben.

Der Kern der Erfindung wird beispielsweise im Gegensatz zu dem o. g. vorbekannten Stand der Technik gemäß dem Patent-Abstracts of Japan, Band 8, Nr. 9 vom 14. Januar 1984 darin gesehen, daß im Gegensatz hierzu die Aufheizvorrichtung nicht im Düsenkanal, sondern in der eigentlichen Düsenspitze in Form einer Innendüse vorgesehen ist, wobei durch den zur Rotationsachse senkrecht stehenden Steg der Wärmeabfluß vorzugsweise während der Abkühlperiode durch eine unterschiedlich vorwählbare Stegdicke einstellbar ist. In einer alternativen Ausführungsform kann dabei die Aufheizvorrichtung aus einem Peltierelement besteht.

Bei der erfindungsgemäßen Punktangußdüse ist in der Düsenspitze eine Innendüse vorgesehen, die eine geringe Masse aufweist und die dort ohne eine im Inneren des Düsenkanals angeordnete Torpedobeheizung bzw. ohne eine im zentralen Fließkanal angeordnete Außenbeheizung beheizt wird. Dadurch besteht die Möglichkeit, die Innendüse äußerst schnell aufzuheizen und ebenso schnell wieder abzukühlen, wobei der Düsenkanal nur während der Einspritz- und Nachdruckphase heiß gehalten wird, so daß eine beliebige Siegelzeit eingestellt werden kann. Während der Kühlphase wird die Düsenspitze vom kalten Werkzeug her (über den Steg) gekühlt, wodurch beim Entformen ein glatter Bruch ermöglicht wird. Mit der zyklischen Beheizung können als klar reproduzierbare Verhältnisse geschaffen werden. Durch die thermodynamische Punktangußdüse lassen sich dabei die folgenden Vorteile realisieren:

Es läßt sich jederzeit ein kosmetischer Anguß mit einem glatten Bruch ohne jedes Zapfen- oder Fadenziehen ermöglichen.

Die Punktangußdüse weist eine größtmögliche freie Strömungsöffnung auf. Durch die Beheizung der Kanalwände während des Einspritzens von Thermoplasten bildet sich nur eine geringe Grenzschichtstärke aus.

Der Düsenkanal wird durch eine verschleißfeste und antiadhäsive Beschichtung aus beispielsweise Titannitrid oder ähnlichem geschützt. Viele Kunststoffschmelzen gleiten dadurch entlang der Kanalwand beim Einspritzen. Das Gleiten hat geringe Scherkräfte und Schubspannungen zur Folge, wodurch das Material geschont wird.

Es sind keinerlei Einbauten vorgesehen, die die Schubspannung vergrößern könnten und die in die Düsenöffnung ragen.

Die Düse hat keine beweglichen Teile, die verklemmen könnten, die dem Verschleiß unterworfen sind oder die genauestens eingestellt werden müßten.

Die heißen Kanalwände kommen nur mit bewegter thermoplastischer Schmelze kurzfristig in Berührung. Sobald der Schmelzfluß steckt, wird die Beheizung abgeschaltet. Deswegen erübrigt sich ein aufwendiges Temperaturüberwachungssystem und die Düse ist besonders für thermisch empfindliche Kunststoffe bestens geeignet.

Es gibt keine Hinterschneidungen und tote Ecken im Fließweg der Schmelze.

Ein Material- oder Farbwechsel kann durch Herausziehen des kalten Pfropfens aus der Vorkammer problemlos ohne Ausschuß durchgeführt werden.

Durch die Dimensionierung der Düsenöffnung kann die Durchflußmenge in Mehrfachwerkzeugen geregelt werden.

Das Heizsystem der Düse verbraucht relativ wenig Strom.

Die Düse ist einfach im Aufbau und kann schnell ein- und ausgebaut werden.

Die Düse ist relativ klein und kompakt. Ihr Einbau verursacht nur eine geringe Schwächung der Werkzeugplatte.

Dabei kann das Beheizungssystem über Widerstandsdraht, induktiv oder auch mittels eines Peltierelementes vorgenommen werden.

Weitere Vorteile, Einzelheiten und Merkmale der Erfindung ergeben sich nachfolgend aus den anhand von Zeichnungen dargestellten Ausführungsbeispielen. Dabei zeigen im einzelnen:

Figur 1: eine schematische Längsschnittdarstellung durch eine erfindungsgemäße Punktangußdüse, die über eine Spule bzw. einen Widerstandsdraht beheizt wird;

Figur 2: eine Abwandlung zu Figur 1, bei der die Beheizung der Innendüse über zwei Kontaktstifte erfolgt;

Figur 3: eine weitere schematische Querschnittsdarstellung einer erfindungsgemäßen Punktangußdüse, bei der die Innendüse über ein Peltierelement beheizt wird.

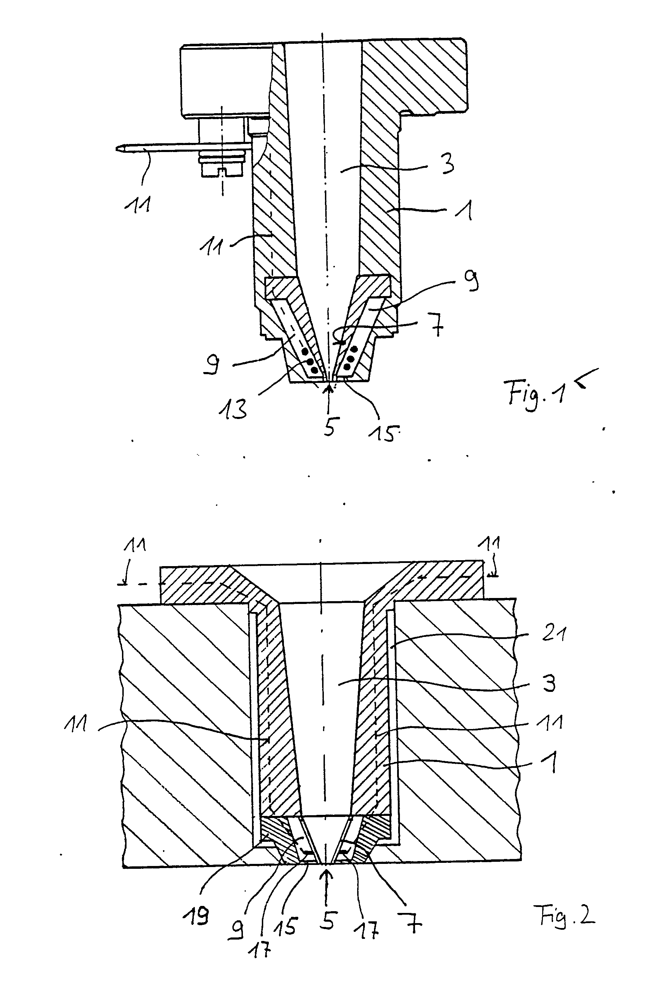

In Figur 1 ist eine Punktangußdüse mit einer in einem Düsenkörper 1 befindlichen Vorkammer 3 gezeigt. An der dem in Figur 1 nicht näher dargestellten untenliegenden Formnest in einem Werkzeug zugewandtliegenden Seite des Düsenkörpers 1 ist die sich zur Angußöffnung 5 hin verjüngende Innendüse 7 vorgesehen. Die Innendüse besteht aus einem gut wärme- und stromleitenden Werkstoff hoher Verschleißfestigkeit mit geringer Masse von beispielsweise weniger als 5 Gramm, 4 Gramm, 3 Gramm oder 2 Gramm, vorzugsweise unter 1 Gramm auf. Die Innendüse 7 ist auf ihrer Außenseite mit einem wärmedämmend und elektrisch schlecht leitenden Material umgeben bzw. beschichtet. Hierfür eignet sich beispielsweise eine Keramik wie beispeilsweise Zirkonoxyd. Natürlich können als Wärmedämmung 9 auch andere Materialien oder andere Keramikmaterialien in Betracht kommen.

Ferner ist in Figur 1 einer von zwei Anschlußdrähten 11 gezeigt. Der weitere Verlauf des Anschlußdrahtes 11 für die Stromversorgung der Beheizung ist nur schematisch strichliert in Figur 1 dargestellt und führt zu einer Spirale oder Spule 13, die in dem Wärmedämmaterial, vorzugsweise in der Keramik 9 eingebettet ist. Die Spule bzw. Spirale 13 kann als Heizspirale, also als Widerstandsdraht zur Beheizung dienen. Möglich ist aber ebenso eine induktive Beheizung über ein Wechselstromfeld mit geeigneter Frequenz, wodurch die Innendüse 7 erwärmt wird.

Bei zügiger Beheizung der Innendüse 7 wird der Aufheizvorgang und der Temperaturverlauf durch die Stärke des am vorderen Ende der Düse gebildeten Steges 15, d. h. des Metallsteges 15 beeinflußt, der die Düsenspitze mit einem in Figur 1 nicht dargestellten Werkzeug thermisch verbindet, bzw. durch die Wärmedämm-, d. h. die Keramikschicht, die den üblichen Düsenkörper vom Werkzeug isoliert. Hierüber kann also der Wärmeabfluß während der Abkühlperiode vorwählbar eingestellt und festgelegt werden. Bei der thermodynamischen Punktangußgüse können als drei Größen variiert werden, nämlich die Heizleistung (Temperatur), die Heizdauer und der Wärmeabfluß.

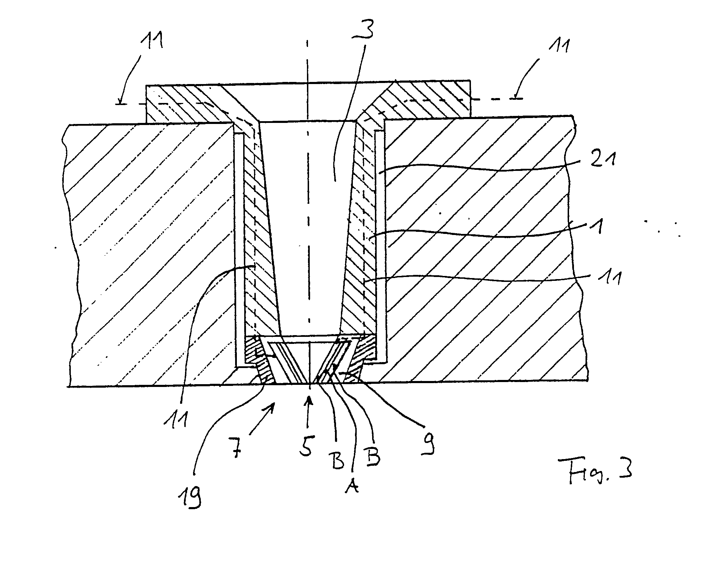

Nachfolgend wird auf Figur 2 Bezug genommen, in der eine Aufheizung der Innendüse 7 über zwei Kontaktstifte 17 zur Erzeugung eines Ohm'schen Widerstandes erfolgt. Abweichend von dem Ausführungsbeispiel von Figur 1 wird hier nicht eine Heizspule oder eine induktive Erwärmung sondern eine Erwärmung über einen definierten Ohm'schen Widerstand vorgenommen. Hierfür eignet sich die Innendüse selbst nicht, da ihr Querschnitt zu groß ist. Als Widerstand werden deshalb die beiden erwähnten Kontaktstifte 17 verwandt, die in der Nähe des engsten Innenquerschnittes der Düse angebracht sind und deren Durchmesser (um 1 mm) genau eingehalten wird, und die mit dem elektrischen Heizkreis mit den beiden Anschlußdrähten 11 verbunden sind. Bei einer Spannung unter 15 Volt entsteht nun, da die übrigen Querschnitte des Heizkreises erheblich größer sind, in diesen Kontaktstiften Wärme, die wegen der guten Wärmeleitfähigkeit sofort in den Düsenkörper geleitet wird.

Der Heizkreis wird beim Öffnen oder Schließen des Werkzeuges durch die Spritzgußmaschine automatisch eingeschaltet. Durch z. B. einen Zeitschalter kann dann die Heizdauer stufenlos eingestellt werden. Weiterhin wird die Stromstärke geregelt, die die Temperatur bestimmt. Die Stromstärke wird beim Einschalten durch geeignete Maßnahmen verstärkt, so daß am Anfang eine schnelle Temperaturerhöhung und damit ein größerer elektrischer Widerstand entsteht. Eine am Anfang größere und dann abfallende Heizleistung kann aber auch durch andere Maßnahmen erzielt werden. Nach der Beheizung ist der Wärmeabfluß während der Kühlphase so groß, daß die Schmelztemperatur im Düsenkanal beim Entformen den Sprödigkeitsbereich erreicht.

D.h., daß die Innendüse nicht ideal wärmeisoliert ist und daß der Wärmeabfluß durch die Art der thermischen Abdichtung beeinflußt werden kann. Während der Heizphase wird dieser Wärmeabfluß durch eine entsprechend große Heizleistung überkompensiert. Da der Wärmewert der Innendüse so geregelt ist, läßt sich die notwendige Heizleistung leicht ermöglichen (maximal 200 W), was durch den erwähnten definierten ohmschen Widerstand unter entsprechender Verwendung von Kontaktstiften erzielt werden kann.

Ferner kann in Figur 2 an einem Stufenabsatz im Bereich zum Werkzeug noch ein Dichtring vorgesehen sein. Der Düsenkörper selbst kann außen mit umlaufenden Vertiefungsringen zur Erzeugung eines Luftspaltes 21 versehen sein. Auch bei dem hier erläuterten Ausführungsbeispiel sind die erwähnten Kontaktstifte 17 im Wärmedämmkörper, vorzugsweise im Keramikkörper liegend eingebettet und stehen mit der Innendüse unter Bildung eines gemeinsamen Heizkreises in Kontakt.

Abschließend wird auf Figur 3 Bezug genommen, in denen eine Beheizung mittels des Peltiereffektes gezeigt ist. Hierzu muß die Innendüse möglichst gut vom übrigen gekühlten Werkzeug thermisch getrennt werden, weshalb die Innendüse in Flußrichtung mit einem vorderen und hinteren Dichtungsring umgeben sein kann. Ferner ist sie mit einer keramischen Isolierung als Wärmedämmung 9, vorzugsweise aus Zirkonoxid ummantelt, die eine geringe Wärmeleitfähigkeit aufweist. Auch die Halterung kann noch besser als bei einer ohmschen Aufheizung thermisch getrennt werden. Die Düse selbst ist als Peltierelement ausgebildet und umfaßt drei ineinander sitzende konische Innendüsenkörper mit einem mittleren Leiter A, an dem innen und außen jeweils ein konischer Leiter B angelötet ist. Die Wärmisolierung 9 ist von einem Stahlring 19 umgeben.

Durch den Stromdurchlauf wird hier entsprechend der Polrichtung des Gleichstromes der innere Innendüsenkörper beheizt oder gekühlt. Da hier also im Falle der induktiven oder ohm'schen Aufheizung ein direkt steuerbarer Kühleffekt möglich ist, hat die Größe und Dimensionierung des bei den anderen Systemen erwähnten Steges 15 und der Wärmedämmung 9 zur Einstellung des Wärmeabflusses während der Abkühlperiode nur geringere Bedeutung. Wie in Figur 3 dargestellt, kann auch auf den Steg 15 bei dieser Ausführungsform verzichtet werden.

Bei der Erfindung handelt es sich also um eine Punktangußdüse, die eine bisher nicht bekannte zusätzliche Innendüse 7 aufweist, die separat beheizt wird. Die Beheizung erfolgt dabei insbesondere bei induktiver Erwärmung oder bei Aufheizung mittels eines Peltierelementes in der Innendüse, d.h. in der Wandung der Innendüse selbst. Bei einer ohmschen Widerstandserwärmung erfolgt die Aufheizung über am Außenumfang der Innendüse vorgesehene Widerstandsspulen oder -drähte, beispielsweise in Form der erwähnten Kontaktstifte. Entsprechende ohmsche Widerstandselemente könnten bei entsprechender Konstruktion auch in der Wandung der Innendüse gegebenenfalls vorgesehen sein.

Bei der Verwendung der Düse in Mehrfachwerkzeugen fällt die Vorkammer weg. Bei Mehrfachwerkzeugen mit mehreren, auch unterschiedlichen Formnestvolumina, kann die Füllgeschwindigkeit durch Variation der Düsenabmessungen bzw. der Düsenöffnung reguliert werden. So kann z. B. eine gleichzeitige Füllung von verschieden großen Formnestern dadurch erzielt werden, daß das kleinere Formnest mit einer Punktangußdüse kleinerer Abmessung versehen wird, das größere mit einer entsprechend größeren Düse. Das beheizte Verteiler-Kanalsystem kann dabei einen durchgehend gleichen Kanalquerschnitt besitzen. Im Falle der Verarbeitung von Thermoplasten wird die Düse während des Einspritzvorganges beheizt, im Falle der Verarbeitung von Elastomeren und Duromeren wird die Düse während des Einspritzens nicht beheizt, sondern erst bei der anschließenden Vernetzungsreaktion.

**Patentansprüche**

1. Punktangußdüse für ein Kunststoff-Spritzgußwerkzeug mit einem zentralen Fließkanal für den Kunststoff und einer Aufheizvorrichtung, dadurch gekennzeichnet, daß an der dem Formnest zugewandten Seite der Punktangußdüse eine konische Innendüse (7) mit geringer Masse ausgebildet ist, die elektrisch beheizbar ist, und die aus einem gut wärmeleitenden Werkstoff hoher Verschleißfestigkeit besteht, und daß an der Düsenspitze ein senkrecht zur Längsachse der Innendüse (7) stehender wärmeleitender Steg (15) vorgesehen ist, der die Düsenspitze mit dem gekühlten Werkzeug thermisch verbindet, wobei über eine unterschiedlich vorwählbare Stegdicke der Wärmeabfluß vorzugsweise während der Abkühlperiode einstellbar ist.

2. Punktangußdüse nach Anspruch 1, dadurch gekennzeichnet, daß die Innendüse (11) zumindest teilweise von dem übrigen Düsenkörper wärmeisoliert bzw. gegenüber diesem wärmegedämmt ist.

3. Punktangußdüse nach Anspruch 2, dadurch gekennzeichnet, daß die Innendüse (7) auf ihrer sie umgebenden Außenseite mit einer Wärmedämmung (9) versehen ist, die vorzugsweise aus einem elektrisch schlecht leitenden Material, beispielsweise Keramik besteht.

4. Punktangußdüse nach einem der Ansprüche 1 bis 3, dadurch gekennzeichnet, daß die Innendüse (7) über einen an ihrer Außenseite vorgesehenen bzw. sie umgebenden widerstandsdraht bzw. -spule (13) beheizbar ist.

5. Punktangußdüse nach Anspruch 4, dadurch gekennzeichnet, daß die Innendüse (7) über zwei oder mehr an der Innendüse (7) außerhalb des Düsenkanals angebrachten bzw. bis an die Innendüse (7) reichende Kontaktstifte (17) unter Bildung eines elektrischen Stromkreises über deren ohmschen Widerstand beheizbar ist.

6. Punktangußdüse nach einem der Ansprüche 1 bis 3, dadurch gekennzeichnet, daß die Innendüse (7) induktiv vorzugsweise über eine sie umgebende Spulenwicklung (13) aufheizbar ist.

7. Punktangußdüse nach einem der Ansprüche 1 bis 6, dadurch gekennzeichnet, daß die Widerstands- bzw. Induktionsheizung in der die Innendüse (7) umgebenden Wärmedämmung (9) eingebettet ist.

8. Punktangußdüse für ein Kunststoff-Spritzgußwerkzeug mit einem zentralen Fließkanal für den Kunststoff und eine Aufheizvorrichtung, dadurch gekennzeichnet, daß an der dem Formnest zugewandten Seite die Punktangußdüse eine Innendüse (7) mit geringer Masse aufweist, wobei die Innendüse (7) aus einem Peltierelement besteht.

9. Punktangußdüse nach Anspruch 8, dadurch gekennzeichnet, daß die ein Peltierelement darstellende Innendüse (7) je nach Polung des Gleichstromes beheiz- oder kühlbar ist, wobei die Innendüse (7) thermisch gut isoliert ist.

10. Punktangußdüse nach einem der Ansprüche 1 bis 9, dadurch gekennzeichnet, daß ein Wärmeabfluß während der Abkühlphase zum gekühlten Werkzeug hin durch unterschiedliche Isoliermaterialien einstellbar ist.

11. Punktangußdüse nach einem der Ansprüche 1 bis 10, dadurch gekennzeichnet, daß die Heizung für die Innendüse (7) vorzugsweise im Bereich der vordersten Düsenspitze, d.h. der Angußöffnung (5) vorgesehen ist.

12. Punktangußdüse nach einem der Ansprüche 1 bis 11, dadurch gekennzeichnet, daß bei Mehrfachwerkzeugen mit gleichen oder unterschiedlichen Formnestvolumina die Füllgeschwindigkeit durch die Düsenabmessung, vorzugsweise durch die Größe der Angußöffnung einstellbar ist.

13. Punktangußdüse nach einem der Ansprüche 1 bis 12, dadurch gekennzeichnet, daß bei Verarbeitung von Elastomeren und Duromeren die höchste Düsentemperatur bei der dem Einspritzvorgang folgenden Vernetzungsphase erreichbar ist.

**Revendications**

1. Culot d'injection capillaire destiné à un moule pour coulage par injection de matière plastique, comportant un canal d'écoulement central pour la matière plastique et un dispositif de chauffage, caractérisé en ce que l'extrémité du culot d'injection capillaire située du côté de la cavité du moule présente un culot intérieur conique (7) de masse plus petite, chauffé électriquement et prévu dans une matière à bonne conductibilité thermique et à haute résistance à l'usure, et en ce que la pointe du culot d'injection présente un rebord (15) conducteur de chaleur, perpendiculaire à l'axe longitudinal du culot intérieur (7) et reliant thermiquement la pointe du culot d'injection au moule refroidi, l'écoulement thermique étant réglé de préférence durant la période de refroidissement par le biais d'une épaisseur de rebord différente définie au préalable.

2. Culot d'injection capillaire suivant la revendication 1, caractérisé en ce qu'une partie au moins du culot intérieur (7) est isolée thermiquement du reste du corps du culot d'injection.

3. Culot d'injection capillaire suivant la revendication 2, caractérisé en ce que le culot intérieur (7) est pourvu d'une isolation thermique (9) l'entourant de son côté extérieur, laquelle est prévue de préférence dans une matière conduisant mal l'électricité, par exemple en céramique.

4. Culot d'injection capillaire suivant une des revendications 1 à 3, caractérisé en ce que culot intérieur (7) est chauffé au moyen d'un fil ou d'une bobine de résistance (13) prévu de son côté extérieur de manière à l'entourer.

5. Culot d'injection capillaire suivant la revendication 4, caractérisé en ce que le culot intérieur (7) est chauffé au moyen de la résistance ohmique d'un circuit électrique formé par deux ou plusieurs broches de contact (17) prévues le long du culot intérieur (7) en dehors du canal d'injection et s'étendant jusqu'au culot intérieur (7).

6. Culot d'injection capillaire suivant une des revendications 1 à 3, caractérisé en ce que le culot intérieur (7) est chauffé inductivement, de préférence au moyen d'un enroulement de bobine (13) l'entourant.

7. Culot d'injection capillaire suivant une des revendications 1 à 6, caractérisé en ce que le chauffage ohmique ou inductif est noyé dans l'isolation thermique (9) entourant le culot intérieur (7).

8. Culot d'injection capillaire destiné à un moule pour coulage par injection de matière plastique, comportant un canal d'écoulement central pour la matière plastique et un dispositif de chauffage, caractérisé en ce que l'extrémité du culot d'injection capillaire située du côté de la cavité du moule présente un culot intérieur (7) de masse plus petite, lequel consiste en un élément Peltier.

9. Culot d'injection capillaire suivant la revendication 8, caractérisé en ce que le culot intérieur (7) formant un élément Peltier est chauffé ou refroidi en fonction de la polarité du courant continu, le culot intérieur (7) étant thermiquement bien isolé.

10. Culot d'injection capillaire suivant une des revendications 1 à 9, caractérisé en ce qu'un écoulement thermique en direction du moule refroidi est contrôlé par différentes matières isolantes durant la phase de refroidissement.

11. Culot d'injection capillaire suivant une des revendications 1 à 10, caractérisé en ce que le chauffage du culot intérieur (7) est prévu de préférence dans la région de l'extrémité avant du culot d'injection, c'est-à-dire près de l'orifice d'injection (5).

12. Culot d'injection capillaire suivant une des revendications 1 à 11, caractérisé en ce lors de l'utilisation de moules à plusieurs empreintes présentant des volumes identiques ou différents, la vitesse d'injection est fonction de la dimension du culot d'injection, de préférence de la dimension de l'orifice d'injection.

13. Culot d'injection capillaire suivant une des revendications 1 à 12, caractérisé en ce que lors de l'injection d'eslastomères et de matières synthétiques thermodurcissantes, la température la plus élevée du culot d'injection est atteinte au cours de la phase de réticulation suivant le processus d'injection.

**Claims**

1. A restricted gate nozzle for a plastic injection molding tool with a central flow duct for the plastic and a heating device, characterized in that on the side, adjacent to the mold cluster, of the restricted gate nozzle a conical inner nozzle (7) with a small mass is formed, which is able to be electrically heated and which consists of a material with a good thermal conductivity and a high resistance to wear, and in that at the tip of the nozzle a thermally conducting rib (15) is provided which projects perpendicularly to the longitudinal axis of the inner nozzle (7) and which thermally connects the nozzle tip with the cooled tool, it being possible to use a preselectable rib thickness in order to set the rate of heat removal, preferably during the cooling down time.

2. The restricted gate nozzle as claimed in claim 1, characterized in that the inner nozzle (11) is at least partly insulated thermally from the rest of the nozzle member of is thermally cut off from it.

3. The restricted gate nozzle as claimed in claim 2, characterized in that the inner nozzle (7) is provided with thermal insulation (9) on the surrounding outer side, such insulation consisting preferably of a material with a low electrical conductivity as for instance ceramic.

4. The restricted gate nozzle as claimed in any one of the preceding claims 1 through 3, characterized in that the inner nozzle (7) is able to be heated by means of a resistance heating wire or coil (13) provided on its outer side or surrounding it.

5. The restricted gate nozzle as claimed in claim 4, characterized in that the inner nozzle (7) is able to be heated via two or more contact pins (17) placed on the inner nozzle (7) outside the nozzle bore or, respectively, extending as far as the inner nozzle (7) with the formation of an electrical circuit via the ohmic resistance thereof.

6. The restricted gate nozzle as claimed in any one of the preceding claims 1 through 3, characterized in that the inner nozzle (7) is arranged to be inductively heated, preferably via a winding (13) surrounding it.

7. The restricted gate nozzle as claimed in any one of the preceding claims 1 through 6, characterized in that the resistance or induction means is embedded in the thermal insulation (9) surrounding the inner nozzle (7).

8. A restricted gate nozzle for a plastic injection molding tool with a central flow duct for the plastic and a heating means, characterized in that on the side adjacent to the mold cluster the restricted gate nozzle has an inner nozzle (7) with a small mass, the inner nozzle (7) consisting of a peltier element.

9. The restricted gate nozzle as claimed in claim 8, characterized in that the inner nozzle (7) constituting a peltier element is able to be heated or cooled in accordance with way the DC flows through it, the inner nozzle (7) being thermally well insulated.

10. The restricted gate nozzle as claimed in any one of the preceding claims 1 through 9, characterized in that a flow of heat taking place during the cooling down phase to the cooled tool is able to be adjusted by different insulating materials.

11. The restricted gate nozzle as claimed in any one of the preceding claims 1 through 10, characterized in that the heating means for the inner nozzle (7) is preferably arranged adjacent to the foremost nozzle tip, that is to say the restricted gate opening (5).

12. The restricted gate nozzle as claimed in any one of the preceding claims 1 through 11, characterized in that in the case of multipurpose tools with the same or different volume of the cluster of molds the filling speed may be set by the size of the nozzle and more particularly by the size of the restricted gate opening.

13. The restricted gate nozzle as claimed in any one of the preceding claims 1 through 12, characterized in that when processing elastomers and hard plastics the maximums nozzle temperature is able to be reached in the ensuing cross linking phase.

EP 0 326 565 B1

Fig. 1

Fig. 2

1

Fig. 3